(19) Europäisches Patentamt
European Patent Office
Office européen des brevets

(11) EP 3 695 509 B1

(12) EUROPÄISCHE PATENTSCHRIFT

(45) Veröffentlichungstag und Bekanntmachung des Hinweises auf die Patenterteilung:
**30.11.2022 Patentblatt 2022/48**

(21) Anmeldenummer: **18752755.1**

(22) Anmeldetag: **09.08.2018**

(51) Internationale Patentklassifikation (IPC):
***H02P 9/48*** *(2006.01)*

(52) Gemeinsame Patentklassifikation (CPC):
**H02P 9/48; H02P 21/0089; H02P 25/22; H02P 27/085;** H02P 2101/45

(86) Internationale Anmeldenummer:
**PCT/EP2018/071588**

(87) Internationale Veröffentlichungsnummer:
**WO 2019/072439 (18.04.2019 Gazette 2019/16)**

# (54) VERFAHREN ZUM WECHSELN ZWISCHEN BLOCKANSTEUERUNG UND PWM-ANSTEUERUNG EINER ELEKTRISCHEN MASCHINE

METHOD FOR CHANGING BETWEEN BLOCK CONTROL AND PWM CONTROL OF AN ELECTRIC MACHINE

PROCÉDÉ POUR EFFECTUER UN CHANGEMENT ENTRE UNE COMMANDE PAR BLOC ET UNE COMMANDE PAR MLI D’UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2017 DE 102017217913**

(43) Veröffentlichungstag der Anmeldung:
**19.08.2020 Patentblatt 2020/34**

(73) Patentinhaber:
- **Robert Bosch GmbH**
  **70442 Stuttgart (DE)**
  Benannte Vertragsstaaten:
  **AL AT BE BG CH CY CZ DE DK EE FI FR GB GR HR HU IE IS LI LT LU LV MC MK MT NL NO PL PT RO RS SE SI SK SM TR**
- **SEG Automotive Germany GmbH**
  **70499 Stuttgart (DE)**

(72) Erfinder: **SZEPANSKI, Daniel**
**07743 Jena (DE)**

(74) Vertreter: **DehnsGermany Partnerschaft von Patentanwälten**
**Theresienstraße 6-8**
**80333 München (DE)**

(56) Entgegenhaltungen:
**DE-A1-102008 020 786** **DE-A1-102011 076 999**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft ein Verfahren zum Betreiben einer elektrischen Maschine sowie eine Recheneinheit und ein Computerprogramm zu dessen Durchführung.

Stand der Technik

Elektrische Maschinen, insbesondere Generatoren, können zur Umwandlung mechanischer Energie in elektrische Energie im Kraftfahrzeug verwendet werden. Üblicherweise werden dazu Klauenpolgeneratoren verwendet, welche meistens mit elektrischer Erregung ausgestattet sind. Da Klauenpolgeneratoren Drehstrom, meist dreiphasig, erzeugen, ist für die üblichen Kraftfahrzeug-Gleichspannungs-Bordnetze eine Gleichrichtung erforderlich. Dazu können Gleichrichter auf Basis von Halbleiterdioden oder Halbleiterschaltern verwendet werden.

Generatoren können auch zum Starten einer Brennkraftmaschine verwendet werden. Solche Generatoren werden auch als Startergenerator bezeichnet. Üblicherweise wird ein derartiger Startergenerator nur bei sehr kleinen Drehzahlen motorisch betrieben, da das erzeugbare Drehmoment über der Drehzahl schnell abnimmt. Denkbar sind jedoch auch größere elektrische Maschinen, die dann auch in einem Hybrid-Fahrzeug zum Antrieb des Fahrzeugs, zumindest aber zur Unterstützung der Brennkraftmaschine, verwendet werden können.

Für die Ansteuerung solcher Startergeneratoren können zum einen ein sog. PWM-Betrieb, bei dem ein Phasenstrom geregelt wird, oder eine sog. Block-Ansteuerung, bei der ein Vorkommutierungswinkel veränderbar ist, verwendet werden. Ein Wechsel zwischen beiden Ansteuerarten kann in Abhängigkeit von einer Drehzahlschwelle vorgenommen werden.

DE 10 2011 076 999 A1 zeigt ein Verfahren zum Betreiben einer elektrischen Maschine in einem Kraftfahrzeug, wobei die elektrische Maschine eine Läuferwicklung, eine Ständerwicklung und einen der Ständerwicklung nachgeschalteten Stromrichter mit ansteuerbaren Schaltelementen aufweist, wobei die elektrische Maschine in einem ersten Betriebsmodus gemäß einem PWM-Betrieb und in einem zweiten Betriebsmodus gemäß einem Blockbetrieb betreibbar ist, wobei die elektrische Maschine während eines Umschaltens von dem ersten in den zweiten Betriebsmodus oder umgekehrt in einem dritten Betriebsmodus betrieben wird, in dem die Pulsdauern von Ansteuersignalen für die ansteuerbaren Schaltelementen verändert werden.

DE 10 2008 020 786 A1 beschreibt eine eine Motorsteuervorrichtung, die anhand einer d-Achsen- und einer q-Achsen-Strom-Referenz, eines erfassten d-Achsen- und q-Achsen-Stromwerts und eines berechneten Frequenzwerts eine Ausgangsspannungsreferenz für einen Wechselrichter steuert, der einen Permanentmagnet-Synchronmotor ansteuert. Wenn eine Drehmomentreferenz eingegeben wird, die ein Drehmoment spezifiziert, das größer als das maximale Drehmoment ist, das der Motor ausgeben kann, wird ein Grenzwert für einen Phasenwinkel, der eine Abweichung zwischen einer Drehphasenreferenz der Steuerung und einem Drehphasenwert des Motors ist, je nach einer Größe des vorgegebenen Zustands geändert.

Offenbarung der Erfindung

Erfindungsgemäß werden ein Verfahren zum Betreiben einer elektrischen Maschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Betreiben einer elektrischen Maschine, beispielsweise einer Klauenpolmaschine, die mit PWM-Ansteuerung und mit Block-Ansteuerung betreibbar ist. Bei einer PWM-Ansteuerung bzw. einem PWM-Betrieb wird vorzugsweise eine sog. feldorientiere Regelung verwendet. Dabei werden die Phasenströme gemessen und in d-q-Koordinaten bzw. in die sog. Raumzeigerdarstellung umgerechnet. Parameter der elektrischen Maschine können über ein gefittetes Polynom ausgerechnet werden, welches Sättigungsabhängigkeiten abbildet und aus diesen Parametern und einem Soll-Drehmoment können dann Referenzströme berechnet werden, die dann über eine feldorientierte Regelung in Spannungsreferenzwerte (in d-q-Koordinaten) umgewandelt werden können. Die Referenzwerte können anschließend in einem PWM-Steuerwerk zu einem Pulsmuster (beispielsweise ein sog. Center-Aligned-Pulsmuster) umgewandelt und über einen Inverter bzw. Stromrichter an den Phasen der elektrischen Maschine gestellt werden.

Bei der Block-Ansteuerung bzw. einem Block-Betrieb kann ein sog. Vorkommutierungswinkel geregelt bzw. vorgegeben werden. Der Vorkommutierungswinkel gibt dabei an, wann in Bezug auf den Nulldurchgang der induzierten Polradspannnung in einer Phase die mit einer Phase verbundenen Halbleiterschalter leitend geschaltet sind. Anstatt auf Ströme zu regeln, kann hier aus den Parametern der Maschine und den aktuellen Strömen ein aktuelles Drehmoment berechnet werden. Dieses kann dann mit einem Soll-Drehmoment verglichen werden und basierend auf der Abweichung kann der Vorkommutierungswinkel geregelt werden (beispielsweise mit einem PI-Regler). Der resultierende Vorkommutirungswinkel kann dann direkt in ein Blockmuster umgewandelt werden, indem immer die maximale Phasenspannung eingeprägt wird. In d-q-Koordinaten kann der Vorkommutierungswinkel als Winkel zwischen dem q-Wert und dem d-Wert der Phasenspannung aufgefasst werden.

Ein Wechsel von der PWM-Ansteuerung zur Block-Ansteuerung erfolgt herkömmlicherweise dann, wenn die Drehzahl der elektrischen Maschine eine vorgegebene Drehzahlschwelle überschreitet oder wenn die Polradspannung die Zwischenkreisspannung überschreitet. Der umgekehrte Wechsel von der Block-Ansteuerung zur PWM-Ansteuerung erfolgt entsprechend und ist ggf. mit einer Hysterese behaftet, um ein ständiges Hin-und-Herwechseln der Ansteuerarten zu verhindern. Die Drehzahlschwelle (bis zu welcher die verwendete Regelung in der Regel stabil verläuft) kann dabei von einem verwendeten Prozessor bzw. dessen Geschwindigkeit abhängen. Die Polradspannung wird dabei durch eine Drehung des Rotors bzw. Läufers und aufgrund von Induktion in den Wicklungssträngen bzw. Phasen hervorgerufen.

Während nun bei einem Wechsel aufgrund des Verhältnisses von Polradspannung zu Zwischenkreisspannung kein Spannungssprung in der Referenzvorgabe der Phasenspannungen stattfindet, wenn in der Block-Ansteuerung immer die Zwischenkreisspannung voll angelegt wird, kann es beim Wechsel aufgrund der Drehzahlschwelle, um beispielsweise die Stabilität der Regelung zu gewährleisten, vorkommen, dass die Polradspannung geringer als die Zwischenkreisspannung ist. Ein solcher Spannungssprung führt zu einem Sprung der Phasenspannung und damit des Drehmoments der elektrischen Maschine.

Für einen Übergang zwischen der PWM-Ansteuerung und der Block-Ansteuerung wird nun gemäß vorgeschlagenem Verfahren eine Übergangs-Ansteuerung verwendet, bei der im Rahmen einer Regelung eines Drehmoments der elektrischen Maschine ein d-Wert einer Phasenspannung (die Phasenspannung wird hier also in d-q-Koordinaten verwendet) als Stellgröße eingestellt, und ein q-Wert der Phasenspannung stetig, d.h. insbesondere (quasi)kontinuierlich, verändert wird. Bei einem Übergang von der PWM-Ansteuerung zur Block-Ansteuerung wird der q-Wert der Phasenspannung vorzugsweise erhöht, bei einem Übergang von der Block-Ansteuerung zur PWM-Ansteuerung wird der q-Wert der Phasenspannung vorzugsweise verringert. Der q-Wert kann dabei mit einem vorgegebenen Gradienten verändert werden. Als Ausgangspunkt für die Änderung des q-Werts der Phasenspannung kommt dabei zweckmäßigerweise ein zuletzt in der vorangehenden Ansteuerung (also PWM-Ansteuerung oder Block-Ansteuerung) verwendeter Wert in Betracht.

Anstatt einen Spannungssprung zu provozieren, wird durch eine solche Übergangsansteuerung der q-Wert der Phasenspannung nur langsam verändert, der d-Wert bleibt dabei im Wesentlichen konstant. Da der d-Wert einen maßgeblichen Einfluss auf den q-Wert des Phasenstroms hat, bleibt dieser im Wesentlichen unverändert. Der q-Wert des Phasenstroms wiederum hat maßgeblichen Einfluss auf das Drehmoment der elektrischen Maschine, welches daher ebenfalls im Wesentlichen konstant bleibt.

Vorteilhafterweise wird der Übergang von der PWM-Ansteuerung zur Block-Ansteuerung direkt und ohne die Übergangs-Ansteuerung vorgenommen, wenn zu Beginn des Übergangs eine Polradspannung der elektrischen Maschine größer oder gleich einer Zwischenkreisspannung der elektrischen Maschine multipliziert mit einem Faktor 2/Pi ist. Der Übergang von der Block-Ansteuerung zur PWM-Ansteuerung wird vorzugsweise direkt und ohne die Übergangs-Ansteuerung vorgenommen, wenn zu Beginn des Übergangs eine Polradspannung der elektrischen Maschine kleiner oder gleich einer Zwischenkreisspannung der elektrischen Maschine multipliziert mit einem Faktor 2/Pi ist. Dabei kann vorzugsweise jeweils ein vorgebbarer, je nach Richtung des Übergangs positiven oder negativen, Offset berücksichtigt werden. In diesen Fällen tritt auch bei direktem Übergang kein Spannungssprung auf, sodass die Übergangs-Ansteuerung nicht benötigt wird. Ein gewisser Spannungssprung von beispielsweise maximal 0,5 V kann jedoch auch hingenommen werden. Mit dem Faktor 2/Pi wird eine Umrechnung in eine maximal stellbare, sinusförmige Grundschwingung in der Block-Ansteuerung ermöglicht.

Vorteilhafterweise wird ein Wechsel von der PWM-Ansteuerung zur Übergangs-Ansteuerung vorgenommen, wenn eine Drehzahl der elektrischen Maschine größer als eine vorgebbare Drehzahlschwelle, vorzugsweise zuzüglich eines vorgebbaren positiven Offsets, ist. In diesem Fall kann also nicht davon ausgegangen werden, dass die Polradspannung gleich oder größer der Zwischenkreisspannung ist, sodass mit der Übergangs-Ansteuerung ein Spannungssprung verhindert werden kann.

Es ist von Vorteil, wenn ein Wechsel von der Übergangs-Ansteuerung zur Block-Ansteuerung vorgenommen wird, wenn ein Betrag der Phasenspannung, hier insbesondere einer internen Referenzphasenspannung in d-q-Koordinaten gleich oder größer der Zwischenkreisspannung multipliziert mit einem Faktor 2/Pi. Hier ist dann durch die Übergangs-Ansteuerung die Spannung soweit erhöht worden, dass kein Spannungssprung und damit auch kein Sprung im Drehmoment mehr auftritt.

Es ist bevorzugt, wenn ein Wechsel von der Block-Ansteuerung zur Übergangs-Ansteuerung vorgenommen wird, wenn eine Drehzahl der elektrischen Maschine kleiner als eine vorgebbare Drehzahlschwelle, vorzugsweise abzüglich eines vorgebbaren positiven Offsets, ist. In diesem Fall kann also nicht davon ausgegangen werden, dass die Polradspannung noch gleich oder größer der Zwischenkreisspannung ist, sodass mit der Übergangs-Ansteuerung ein Spannungssprung verhindert werden kann.

Vorteilhafterweise wird ein Wechsel von der Übergangs-Ansteuerung zur PWM-Ansteuerung vorgenommen, wenn ein d-Wert eines Phasenstroms gleich oder kleiner einem Referenzwert für den d-Wert des Phasenstroms in der PWM-Ansteuerung, vorzugsweise abzüglich eines vorgebbaren positiven Offsets, ist. Da hier im Voraus kein Wert für eine Spannung bekannt ist, kann durch die erwähnte Bedingung für den Strom erreicht werden, dass kein Sprung in Spannung oder Drehmoment stattfindet.

Der Offset kann in den erwähnten Fällen - im Sinne einer Hysterese - dazu verwendet werden, zu verhindern, dass an der Grenze ein ständiger Wechsel zwischen den Ansteuerungsarten erfolgt.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

| | |
|---|---|
| Figur 1 | zeigt schematisch eine elektrische Maschine, bei der ein erfindungsgemäßes Verfahren durchführbar ist. |
| Figur 2 | zeigt schematisch eine Möglichkeit zur Ansteuerung einer elektrischen Maschine. |
| Figur 3 | zeigt schematisch Stromverläufe bei einer elektrischen Maschine. |
| Figur 4 | zeigt eine Phasenspannung einer Phase für einen Übergang zwischen einer PWM-Ansteuerung und einer Block-Ansteuerung. |
| Figuren 5a und 5b | zeigen Bereiche für verschiedene Ansteuerungsarten. |
| Figur 6 | zeigt verschiedene Größen der elektrischen Maschine ohne Verwendung eines erfindungsgemäßen Verfahrens. |
| Figuren 7, 8 und 9 | zeigen drei verschiedene Ansteuerungsarten, wie sie bei einem erfindungsgemäßen Verfahren in einer bevorzugten Ausführungsform verwendet werden können. |
| Figur 10 | zeigt einen Ablauf eines mäßen Verfahren in einer weiteren bevorzugten Ausführungsform. |
| Figur 11 | zeigt verschiedene Größen der elektrischen Maschine bei Verwendung eines erfindungsgemäßen Verfahrens in einer weiteren bevorzugten Ausführungsform. |

Ausführungsform(en) der Erfindung

In Figur 1 ist schematisch und als Schaltbild eine elektrische Maschine, bei der ein erfindungsgemäßes Verfahren durchführbar ist, dargestellt. Die elektrische Maschine 100 ist hier beispielhaft als eine fremderregte, fünfphasige elektrische Maschine ausgebildet. Es versteht sich, dass auch eine andere Anzahl an Phasen, beispielsweise drei, verwendet werden kann. Die elektrische Maschine 100 kann zudem beispielsweise als Klauenpolmaschine ausgebildet sein.

Die elektrische Maschine 100 weist hierbei fünf Statorwicklungen 120 und eine Erreger- bzw. Läuferwicklung 110 auf. Über eine als Ansteuereinheit 140 ausgebildete Recheneinheit kann ein Erregerstrom $I_{ex}$ in der Erregerwicklung 110 eingestellt werden. Weiterhin ist eine Schaltungsanordnung 130 mit Schaltern 131, hier beispielhaft MOSFETS, von denen nur einer mit einem Bezugszeichen versehen ist, vorgesehen, mittels welcher eine Spannung U an die Statorwicklungen 120 angelegt oder abgegriffen werden kann, je nachdem ob die elektrische Maschine motorisch oder generatorisch betrieben wird.

Die Schalteranordnung 130 und die Steuereinheit 140 können auch jeweils Teil einer gemeinsamen Steuereinheit oder eines Inverters für die elektrische Maschine sein.

In Figur 2 ist schematisch eine Möglichkeit zur Ansteuerung einer elektrischen Maschine, wie sie beispielsweise in Figur 1 gezeigt ist, dargestellt. Im oberen Diagramm ist eine Spannung U über der Zeit t dargestellt, im unteren Diagramm ein Tastgrad T über der Zeit t.

Hierbei handelt es sich um Ansteuermuster nach einem Standardverfahren der sog. Dreieck-Sinus-Modulation. Die gewünschte Sollspannung, nämlich der Sinus-Verlauf im oberen Diagramm, wird hier überlagert von einem Dreiecksignal (auch im oberen Diagramm gezeigt), das eine deutlich höhere Frequenz aufweist als das der elektrischen Grundwelle (in der Regel mehr als 10 kHz). Jeder Schnittpunkt kennzeichnet ein Umschalten des PWM-Signals.

Das Ansteuermuster im unteren Diagramm kann nun mit einem PWM-Steuerwerk erzeugt werden. Für eine Klauenpolmaschine wird diese PWM-Ansteuerung in der Regel bis zur erwähnten Spannungsgrenze verwendet. Ab bzw. oberhalb der Spannungsgrenze wird die elektrische Maschine dann mit einem Blockmuster im Blockbetrieb bzw. mit der sog. Block-Ansteuerung angesteuert.

Diese Block-Ansteuerung zeichnet sich dadurch aus, dass die Phasenspannungen die maximal mögliche Amplitude aufweisen und diese Amplitude nicht veränderbar ist (theoretisch ist dies möglich durch Ansteuerung mit Blockbreiten von weniger 180°, dies wird jedoch in aller Regel nicht verwendet).

Als Stellgröße für ein gewünschtes Soll-Drehmoment der elektrischen Maschine dient nun neben dem Erregerstrom die Phasenlage des Spannungsvektors, der sogenannte Vorkommutierungswinkel.

Da sich die Amplitude im Blockbetrieb nicht verändern lässt (oder zumindest nicht verändert wird), wird diese Ansteuerart nur oberhalb der Spannungsgrenze verwendet (d.h. wenn die Polradspannung größer als die anliegende Zwischenkreisspannung ist), im vorliegenden Fall typischerweise bei Drehzahlen größer als 3.000/min.

In Figur 3 sind Stromverläufe, hier die Phasenströme, gezeigt, die bei drehender elektrischer Maschine und sinusförmiger Phasenspannungsvorgabe erzeugt werden. Hierzu ist ein Strom I über der Zeit t aufgetragen.

Bei symmetrischer Verteilung können die einzelnen Phasenströme $I_A$, $I_B$, $I_C$, $I_D$ und $I_E$ zu einem Raumzeiger zusammengefasst werden. Hierzu werden die bekannten Clarke- und Park-Transformationen verwendet. Zunächst ergeben sich die Ströme $I_\alpha$ und $I_\beta$ mit der Clarke-Transformation gemäß den Formeln:

$$I_\alpha = \left( I_A + I_B \cos\left(\frac{2\pi}{5}\right) + I_C \cos\left(\frac{4\pi}{5}\right) + I_D \cos\left(\frac{6\pi}{5}\right) + I_E \cos\left(\frac{8\pi}{5}\right)\right)$$

und

$$I_\beta = \left( I_B \sin\left(\frac{2\pi}{5}\right) + I_C \sin\left(\frac{4\pi}{5}\right) + I_D \sin\left(\frac{6\pi}{5}\right) + I_E \sin\left(\frac{8\pi}{5}\right)\right).$$

Daraus ergeben sich die Ströme $I_d$ und $I_q$ mit der Park-Transformation dann gemäß den Formeln:

$$I_d = I_\alpha \cos\theta + I_\beta \sin\theta \text{ und } I_q = -I_\alpha \sin\theta + I_\beta \cos\theta ,$$

wobei mit $\theta$ hier der Winkel des Läufers bzw. Rotors der elektrischen Maschine bezeichnet ist. Auf die gleiche Weise kann auch die Spannung in d-q-Koordination transformiert werden.

In Figur 4 ist die Phasenspannung einer Phase für den Übergang zwischen einer PWM-Ansteuerung und einer Block-Ansteuerung bzw. dem Blockbetrieb dargestellt. Hierzu sind Spannung U und Strom I über der Zeit t aufgetragen. Dabei ist am Verlauf des Stroms zu sehen, dass hier keine Regelung mehr auf den Phasenstrom stattfindet.

In den Figuren 5a und 5b sind Bereiche für verschiedene Ansteuerungsarten gezeigt, anhand welcher eine Regelstrategie bei vorliegendem Verfahren erläutert werden soll. Hierzu ist jeweils ein Drehmoment M über einer Drehzahl n der elektrischen Maschine aufgetragen.

Der Bereich I gibt dabei einen solchen Bereich an, in dem die Polradspannung noch kleiner als die Zwischenkreisspannung ist. Der Bereich III gibt einen Bereich an, in dem die Drehzahl n größer als die Drehzahlschwelle $n_{Gr}$ ist.

Für höhere Drehmomente wird bei einer fremderregten elektrischen Maschine in aller Regel ein höherer Erregerstrom gestellt, sodass die Polradspannung bereits bei einer niedrigeren Drehzahl als der Grenzdrehzahl $n_{Gr}$ die Zwischenkreisspannung überschreitet. Für einen konstanten Erregerstrom steigt die Polradspannung proportional an.

Die Grenzdrehzahl $n_{Gr}$ bezeichnet dabei Drehzahlschwelle bis zu der die Phasenstromregelung stabil läuft. Diese Drehzahl ist abhängig von der Abtastfrequenz des Reglers. Je nach Situation und gewünschter Genauigkeit des Reglers im PWM-Betrieb können dabei Drehzahlschwellen derart festgelegt werden, dass die Abtastfrequenzen mindestens dem zweifachen bis hin zum zwanzigfachen einer der Drehzahlschwelle entsprechenden Frequenz entspricht. Die Drehzahlschwelle, bis zu der der Regler stabil läuft, ist auch abhängig von der Geschwindigkeit des verwendeten Prozessors.

Bis zur Grenze, bei der die Polradspannung kleiner als die Zwischenkreisspannung ist (Bereich I), oder bis zur Drehzahlschwelle $n_{Gr}$ (links von Bereich III) werden die Phasenströme geregelt und das Pulsmuster über PWM erzeugt. Sobald die Polradspannung größer als die Zwischenkreisspannung ist, wenn die Drehzahlschwelle erreicht wird, werden nicht mehr die Phasenströme geregelt, sondern es wird die maximale Phasenspannung im Blockmuster gestellt und der Vorkommutierungswinkel geregelt.

Bei dem in Figur 5a dargestellten Fall ist die Drehzahlschwelle nun so groß, dass - unabhängig vom aktuellen Drehmoment - immer der Bereich II erreicht wird, bevor die Drehzahlschwelle $n_{Gr}$ überschritten wird. Dies bedeutet, dass immer ein PWM-Blockübergang ohne Spannungssprung stattfinden kann. Im Bereich II kann auch der Blockbetrieb verwendet werden.

Bei dem in Figur 5b dargestellten Fall hingegen ist zu sehen, dass die Drehzahlschwelle $n_{Gr}$ für kleine Drehmomente kleiner als der ideale Übergangspunkt für den Blockbetrieb ist, nämlich dort, wo die Bereiche I und III aneinandergrenzen. In diesem Fall muss aufgrund der Drehzahlschwelle für die Stabilität der Phasenstromregelung in den Blockbetrieb gesprungen werden.

Wird an dieser Drehzahl ein Übergang von PWM-Ansteuerung zu Block-Ansteuerung vorgenommen, so springt die Spannung und es gibt einen Drehmomentsprung.

In Figur 6 ist ein solches Verhalten dargestellt. Hierzu sind ein Drehmoment M, eine Drehzahl n, ein Strom I und eine Spannung U über der Zeit t aufgetragen. Zum Zeitpunkt to wird der Übergang von der PWM-Ansteuerung zur Block-Ansteuerung vorgenommen, hier bei einer Drehzahl von ca. 3.800/min.

Im Übergangspunkt erkennt man einen Sprung der Phasenspannungen $U_d$ und $U_q$. Das Drehmoment springt hier von ca. -1,7 Nm auf +4 Nm und die Phasenströme $I_d$ und $I_q$ fangen an zu schwingen. Bis der komplette Sprung in der Phasenspannung ausgeregelt ist, vergehen ca. 15 ms. Dieses Problem wird durch das vorliegende Verfahren gelöst, wie nachfolgend näher erläutert werden soll.

In den Figuren 7, 8 und 9 werden drei verschiedene Ansteuerungsarten, wie sie bei einem erfindungsgemäßen Verfahren in einer bevorzugten Ausführungsform verwendet werden können, erläutert. Diese einzelnen Ansteuerungsarten können dabei als Regler bzw. im Rahmen einer Regelung durchgeführt werden.

In Figur 7 ist die PWM-Ansteuerung bzw. der PWM-Betrieb mit feldorientierter Regelung gezeigt. Die Phasenströme, hier mit $I_{A...E}$ bezeichnet, werden gemessen und in Raumzeigerdarstellung zu $I_q$ und $I_d$ umgerechnet. Der Erregerstrom $I_{ex}$ in der Erregerwicklung wird außerdem erfasst. Die Parameter P der elektrischen Maschine wie beispielsweise Induktivitäten und verkettete Flüsse werden über ein Polynom und unter Berücksichtigung von Sättigungseigenschaften mit Hilfe der Ströme $I_q$ , $I_d$, $I_{ex}$ ausgerechnet. Aus den Parametern P und einem Soll-Drehmoment $M_{soll}$ werden Referenzströme $I_{q,ref}$ und $I_{d,ref}$ berechnet und über eine feldorientierte Regelung in Spannungsreferenzwerte $U_d$ und $U_q$ umgewandelt. Für die Berechnung der Referenzströme können eine Temperatur T und der davon abhängige Widerstand $R_S$ des Stators berücksichtigt werden.

Die Referenzwerte werden anschließend in einem PWM-Steuerwerk zu einem Pulsmuster 180, beispielsweise einem Center-Aligned-Pulsmuster, umgewandelt und über einen Inverter bzw. Stromrichter an den Phasen der elektrischen Maschine 100 gestellt. Über einen Sensor 170 können dabei noch ein Rotorlagewinkel $\vartheta$ und eine elektrische Kreisfrequenz $\omega_{el}$ ermittelt und dann berücksichtigt werden.

In Figur 8 ist die Block-Ansteuerung bzw. der Blockbetrieb mit Regelung des Vorkommutierungswinkels gezeigt. Anstatt auf Ströme zu regeln, wird hier aus den Parametern P der elektrischen Maschine und den aktuellen Strömen $I_q$, $I_d$ das aktuelle Drehmoment $M_{ist}$ berechnet. Dieses wird mit dem Solldrehmoment $M_{soll}$ verglichen und basierend auf der Abweichung wird der Vorkommutierungswinkel geregelt (vorzugsweise ein PI-Regler). Der resultierende Vorkommutierungswinkel, hier mit $\alpha$ bezeichnet, wird direkt in ein Blockmuster 181 umgewandelt, bei dem immer die maximale Phasenspannung eingeprägt wird. Im Übrigen sei auf die Beschreibung zu Figur 7 verwiesen, wobei hier jedoch die elektrische Kreisfrequenz $\omega_{el}$ nicht benötigt wird.

In Figur 9 ist eine Übergangs-Ansteuerung mit Regelung des q-Werts der Phasenspannung gezeigt. Dies stellt eine Mischung der beiden zuvor erläuterten Ansteuerungsarten dar. Es wird wieder das aktuelle Drehmoment $M_{ist}$ mit dem Solldrehmoment $M_{soll}$ verglichen, allerdings wird nur der d-Wert der Phasenspannung $U_d$ geregelt bzw. gestellt. Der q-Wert der Phasenspannung $U_q$ wird, ausgehend von dem Initialwert $U_{q,init}$, mit einem festen Gradienten $\Delta U$ erhöht. Denkbar ist, ein Spannungslimit $U_{Gr}$ zu berücksichtigen. Der Initialwert ist der letzte Wert der Block-Ansteuerung bzw. der PWM-Ansteuerung. Mit einem PWM-Werk wird hier dann ein Pulsmuster 182 gestellt.

In Figur 10 sind nun Übergänge zwischen den einzelnen Ansteuerungsarten bei einem erfindungsgemäßen Verfahren in einer weiteren bevorzugten Ausführungsform dargestellt.

Wenn die Polradspannung $U_P$ größer als die Zwischenkreisspannung $U_{dc}$ multipliziert mit dem Faktor 2/Pi ist, so ist die Bedingung für einen direkten Übergang zwischen der PWM-Ansteuerung $A_1$ und der Block-Ansteuerung $A_3$ gegeben und die Übergangs-Ansteuerung $A_2$ wird nicht benötigt. Der Faktor 2/Pi erlaubt die Umrechnung in die maximal stellbare, sinusförmige Grundschwingung im Blockbetrieb.

Soll ein Übergang aufgrund der Drehzahlschwelle $n_{Gr}$ erfolgen, so wird die Übergangs-Ansteuerung $A_2$ ver-

wendet. Bei den einzelnen Bedingungen kann jeweils eine Hysterese bzw. ein Offset O verwendet werden, um ein ständiges Wechseln der Zustände zu vermeiden.

Wurde die Übergangs-Ansteuerung $A_2$ ausgehend von der PWM-Ansteuerung $A_1$ verwendet und die Bedingung "Drehzahl n größer als Drehzahlschwelle $n_{Gr}$ ($n>n_{Gr}$)" bleibt erfüllt, so wird der q-Wert der Phasenspannung mit einem festen Gradienten erhöht, bis die Bedingung, dass der Betrag der Phasenspannung $U_{dq}$ gleich oder zumindest in etwa gleich der Zwischenkreisspannung $U_{dc}$ multipliziert mit dem Faktor 2/Pi ist, erfüllt wird. Der d-Wert der Phasenspannung wird auf das jeweils erforderliche Drehmoment geregelt. Physikalisch bewirkt die Erhöhung von $U_q$ eine Vergrößerung des d-Stroms, sodass das Feld gestärkt wird, die Polradspannung größer wird und ein reibungsloser Übergang ermöglicht wird.

Wird beim Übergang die Bedingung "$n>n_{Gr}$" verletzt, so wird, solange die Bedingung ungültig bzw. verletzt ist, der q-Wert der Phasenspannung nicht mehr inkrementiert, sondern dekrementiert, und in den PWM-Betrieb zurück gewechselt.

Wird die Übergangs-Ansteuerung $A_2$ ausgehend vom Blockbetrieb verwendet, so wird $U_q$ mit dem letzten Wert aus dem Blockbetrieb initialisiert und dekrementiert. Da bei PWM-Ansteuerung $A_1$ im Voraus keine Übergangsspannung bekannt ist, ist hier die Bedingung, dass der gestellte d-Strom kleiner als die Referenz $I_{d,ref}$ im PWM-Betrieb ist. Dies zeigt, dass das Feld mehr geschwächt wird, als es im jeweiligen Betriebspunkt optimal wäre, und stellt somit eine gültige Übergangsbedingung dar.

In Figur 11 sind die Größen aus Figur 6 erneut dargestellt, hier jedoch mit Verwendung der Übergangs-Ansteuerung. Anstatt einen Spannungssprung in $U_d$ und $U_q$ zu provozieren, wird nun die Spannung für $U_q$ langsam inkrementiert (Gradient beispielsweise bei 400V/s). $U_d$ bleibt ungefähr konstant, da $U_d$ in diesem Fall den Einfluss auf den Strom $I_q$ hat, $I_q$ den maßgeblichen Effekt auf das gestellte Moment hat, und das geforderte Drehmoment im dargestellten Bereich nahezu konstant ist (hier bei einer Regelung auf konstante Leistung). Der d-Strom nimmt von ca. -31 A auf knapp über 0 A zu. Im Vergleich zu Figur 6 ergibt sich beim Übergang nunmehr ein konstantes Drehmoment.

## Patentansprüche

1. Verfahren zum Betreiben einer elektrischen Maschine (100), die mit PWM-Ansteuerung ($A_1$) und mit Block-Ansteuerung ($A_3$) betreibbar ist,
**dadurch gekennzeichnet, daß** für einen Übergang zwischen der PWM-Ansteuerung ($A_1$) und der Block-Ansteuerung ($A_3$) eine Übergangs-Ansteuerung ($A_2$) verwendet wird, bei der im Rahmen einer Regelung eines Drehmoments (M) der elektrischen Maschine (100) ein d-Wert einer Phasenspannung ($U_d$) als Stellgröße eingestellt, und ein q-Wert der Phasenspannung ($U_q$) stetig verändert wird.

2. Verfahren nach Anspruch 1, wobei bei einem Übergang von der PWM-Ansteuerung ($A_1$) zur Block-Ansteuerung ($A_3$) der q-Wert der Phasenspannung ($U_q$) erhöht wird, und/oder
wobei bei einem Übergang von der Block-Ansteuerung ($A_3$) zur PWM-Ansteuerung ($A_1$) der q-Wert der Phasenspannung ($U_q$) verringert wird.

3. Verfahren nach Anspruch 1 oder 2, wobei der q-Wert der Phasenspannung ($U_q$) mit einem vorgegebenen Gradienten ($\Delta U$) verändert wird.

4. Verfahren nach einem der vorstehenden Ansprüche, wobei q-Wert der Phasenspannung ($U_q$) ausgehend von einem zuletzt in der vorangehenden Ansteuerung ($A_1$, $A_3$) verwendeten Wert verändert wird.

5. Verfahren nach einem der vorstehenden Ansprüche, wobei der Übergang von der PWM-Ansteuerung ($A_1$) zur Block-Ansteuerung ($A_3$) direkt und ohne die Übergangs-Ansteuerung vorgenommen wird, wenn zu Beginn des Übergangs eine Polradspannung ($U_P$) der elektrischen Maschine größer oder gleich einer Zwischenkreisspannung ($U_{dc}$) der elektrischen Maschine multipliziert mit einem Faktor 2/Pi ist und/oder wobei der Übergang von der Block-Ansteuerung ($A_3$) zur PWM-Ansteuerung ($A_1$) direkt und ohne die Übergangs-Ansteuerung vorgenommen wird, wenn zu Beginn des Übergangs eine Polradspannung ($U_P$) der elektrischen Maschine kleiner oder gleich einer Zwischenkreisspannung ($U_{dc}$) der elektrischen Maschine multipliziert mit einem Faktor 2/Pi ist, vorzugsweise jeweils zuzüglich eines vorgebbaren, je nach Richtung des Übergangs positiven oder negativen, Offsets (O).

6. Verfahren nach einem der vorstehenden Ansprüche, wobei ein Wechsel von der PWM-Ansteuerung ($A_1$) zur Übergangs-Ansteuerung ($A_3$) vorgenommen wird, wenn eine Drehzahl (n) der elektrischen Maschine größer als eine vorgebbare Drehzahlschwelle ($n_{Gr}$), vorzugsweise zuzüglich eines vorgebbaren positiven Offsets (O), ist.

7. Verfahren nach einem der vorstehenden Ansprüche, wobei ein Wechsel von der Übergangs-Ansteuerung ($A_2$) zur Block-Ansteuerung ($A_3$) vorgenommen wird, wenn ein Betrag der Phasenspannung ($U_{dq}$) in d-q-Koordinaten gleich oder größer der Zwischenkreisspannung ($U_{dc}$) multipliziert mit einem Faktor 2/Pi ist.

8. Verfahren nach einem der vorstehenden Ansprüche, wobei ein Wechsel von der Block-Ansteuerung ($A_3$) zur Übergangs-Ansteuerung ($A_2$) vorgenommen wird, wenn eine Drehzahl (n) der elektrischen Maschine kleiner als eine vorgebbare Drehzahlschwelle ($n_{Gr}$), vorzugsweise abzüglich eines vorgebbaren positiven Offsets (O), ist.

9. Verfahren nach einem der vorstehenden Ansprüche, wobei ein Wechsel von der Übergangs-Ansteuerung ($A_2$) zur PWM-Ansteuerung ($A_1$) vorgenommen wird, wenn ein d-Wert eines Phasenstroms ($I_d$) gleich oder kleiner einem Referenzwert ($I_{d,ref}$) für den d-Wert des Phasenstroms in der PWM-Ansteuerung, vorzugsweise abzüglich eines vorgebbaren positiven Offsets (O), ist.

10. Recheneinheit (140), die dazu eingerichtet ist, ein Verfahren nach einem der vorstehenden Ansprüche durchzuführen.

11. Computerprogramm, das eine Recheneinheit (140) dazu veranlasst, ein Verfahren nach einem der Ansprüche 1 bis 9 durchzuführen, wenn es auf der Recheneinheit (140) ausgeführt wird.

12. Maschinenlesbares Speichermedium mit einem darauf gespeicherten Computerprogramm nach Anspruch 11.

## Claims

1. A method for operating an electrical machine (100) which can be operated with PWM control ($A_1$) and with block control ($A_3$),
**characterised in that** a transition control ($A_2$) is used for a transition between the PWM control ($A_1$) and the block control ($A_3$), in which a d value of a phase voltage ($U_d$) is set as a manipulated variable within the scope of a control of a torque (M) of the electrical machine (100), and a q value of the phase voltage ($U_q$) is continuously changed.

2. The method according to claim 1, wherein the q value of the phase voltage ($U_q$) is increased during a transition from PWM control ($A_1$) to block control ($A_3$), and/or
whereby the q value of the phase voltage ($U_q$) is reduced during a transition from block control ($A_3$) to PWM control ($A_1$ ).

3. The method according to claim 1 or 2, wherein the q value of the phase voltage ($U_q$) is changed with a predetermined gradient ($\Delta U$).

4. The method according to any of the preceding claims, wherein q value of the phase voltage ($U_q$) is changed starting from a value last used in the preceding control ($A_1$ , $A_3$ ).

5. The method according to any one of the preceding claims, wherein the transition from the PWM control ($A_1$) to the block control ($A_3$) is carried out directly and without the transition control if, at the start of the transition, a pole wheel voltage ($U_P$ ) of the electrical machine is greater than or equal to an intermediate circuit voltage ($U_{dc}$) of the electrical machine multiplied by a factor 2/Pi, and/or wherein the transition from the block control ($A_3$) to the PWM control ($A_1$ ) is carried out directly and without the transition control, if, at the start of the transition, a pole wheel voltage ($U_P$ ) of the electrical machine is less than or equal to an intermediate circuit voltage ($U_{dc}$ ) of the electrical machine multiplied by a factor 2/Pi, preferably in each case plus a predeterminable offset (O) which is positive or negative depending on the direction of the transition.

6. The method according to any one of the preceding claims, wherein a change from the PWM control ($A_1$ ) to the transition control ($A_3$ ) is made when a rotational speed (n) of the electrical machine is greater than a predeterminable speed threshold ($n_{Gr}$ ), preferably plus a predeterminable positive offset (O).

7. The method according to any one of the preceding claims, wherein a change from the transition control ($A_2$ ) to the block control ($A_3$ ) is made when an amount of the phase voltage ($U_{dq}$ ) in d-q coordinates is equal to or greater than the intermediate circuit voltage ($U_{dc}$ ) multiplied by a factor 2/Pi.

8. The method according to any one of the preceding claims, wherein a change from the block control ($A_3$ ) to the transition control ($A_2$ ) is made when a rotational speed (n) of the electrical machine is lower than a predeterminable rotational speed threshold ($n_{Gr}$ ), preferably minus a predeterminable positive offset (O).

9. The method according to any one of the preceding claims, wherein a change from the transition control ($A_2$ ) to the PWM control ($A_1$ ) is made when a d value of a phase current ($I_d$ ) is equal to or smaller than a reference value ($I_{d,ref}$ ) for the d value of the phase current in the PWM control, preferably minus a predeterminable positive offset (O).

10. A computing unit (140) adapted to perform a method according to any one of the preceding claims.

11. A computer program that causes a computing unit (140) to perform a method according to any one of claims 1 to 9 when executed on the computing unit (140).

12. A machine-readable storage medium having a computer program stored thereon according to claim 11.

## Revendications

1. Procédé pour faire fonctionner une machine électrique (100) qui peut être entraînée avec une commande par PWM ($A_1$) et avec une commande par bloc ($A_3$),
**caractérisé en ce qu'**une commande de transfert ($A_2$) est utilisée pour un transfert entre la commande par PWM ($A_1$) et la commande par bloc ($A_3$), dans lequel dans le cadre d'une régulation d'un couple (M) de la machine électrique (100), une valeur d d'une tension de phase ($U_d$) est réglée comme une grandeur réglante, et une valeur q de la tension de phase ($U_q$) est changée de façon continue.

2. Procédé selon la revendication 1, dans lequel lors d'un transfert de la commande par PWM ($A_1$) à la commande par bloc ($A_3$), la valeur q de la tension de phase ($U_q$) est augmentée, et/ou
dans lequel lors d'un transfert de la commande par bloc ($A_3$) à la commande par PWM ($A_1$), la valeur q de la tension de phase ($U_q$) est réduite.

3. Procédé selon la revendication 1 ou 2, dans lequel la valeur q de la tension de phase ($U_q$) est changée avec un gradient ($\Delta U$) prédéfini.

4. Procédé selon l'une des revendications précédentes, dans lequel la valeur q de la tension de phase ($U_q$) est changée en partant d'une valeur utilisée en dernier dans la commande ($A_1$, $A_3$) précédente.

5. Procédé selon l'une des revendications précédentes, dans lequel le transfert de la commande par PWM ($A_1$) à la commande par bloc ($A_3$) est réalisé directement et sans la commande de transfert, lorsqu'une force électromotrice synchrone ($U_P$) de la machine électrique au début du transfert est supérieure ou égale à une tension de circuit intermédiaire ($U_{dc}$) de la machine électrique multipliée par un facteur 2/Pi et/ou dans lequel le transfert de la commande par bloc ($A_3$) à la commande par PWM ($A_1$) est réalisé directement et sans la commande de transfert, lorsqu'une force électromotrice synchrone ($U_P$) de la machine électrique au début du transfert est inférieure ou égale à une tension de circuit intermédiaire ($U_{dc}$) de la machine électrique multipliée par un facteur 2/Pi, de préférence plus, dans chaque cas, un décalage (O), positif ou négatif, pouvant être prédéfini en fonction de la direction du transfert.

6. Procédé selon l'une des revendications précédentes, dans lequel un changement de la commande par PWM ($A_1$) à la commande de transfert ($A_3$) est réalisé lorsqu'une vitesse de rotation (n) de la machine électrique est supérieure à un seuil de vitesse de rotation ($n_{Gr}$) pouvant être prédéfini, de préférence plus un décalage (O) positif pouvant être prédéfini.

7. Procédé selon l'une des revendications précédentes, dans lequel un changement de la commande de transfert ($A_2$) à la commande par bloc ($A_3$) est réalisé lorsqu'une grandeur de la tension de phase ($U_{dq}$) en coordonnées d-q est égale ou supérieure à la tension de circuit intermédiaire ($U_{dc}$) multipliée par un facteur 2/Pi.

8. Procédé selon l'une des revendications précédentes, dans lequel un changement de la commande par bloc ($A_3$) à la commande de transfert ($A_2$) est réalisé lorsqu'une vitesse de rotation (n) de la machine électrique est inférieure à un seuil de vitesse de rotation ($n_{Gr}$) pouvant être prédéfini, de préférence moins un décalage (O) positif pouvant être prédéfini.

**9.** Procédé selon l'une des revendications précédentes, dans lequel un changement de la commande de transfert ($A_2$) à la commande par PWM ($A_1$) est réalisé lorsqu'une valeur d d'un courant de phase ($I_d$) est égale ou inférieure à une valeur de référence ($I_{d,ref}$) pour la valeur d du courant de phase dans la commande par PWM, de préférence moins un décalage (O) positif pouvant être prédéfini.

**10.** Unité de calcul (140) configurée pour mettre en œuvre un procédé selon l'une des revendications précédentes.

**11.** Programme informatique qui permet à une unité de calcul (140) de mettre en œuvre un procédé selon l'une des revendications 1 à 9, lorsqu'il est exécuté sur l'unité de calcul (140).

**12.** Support de mémoire lisible par machine sur lequel est stocké un programme informatique selon la revendication 11.

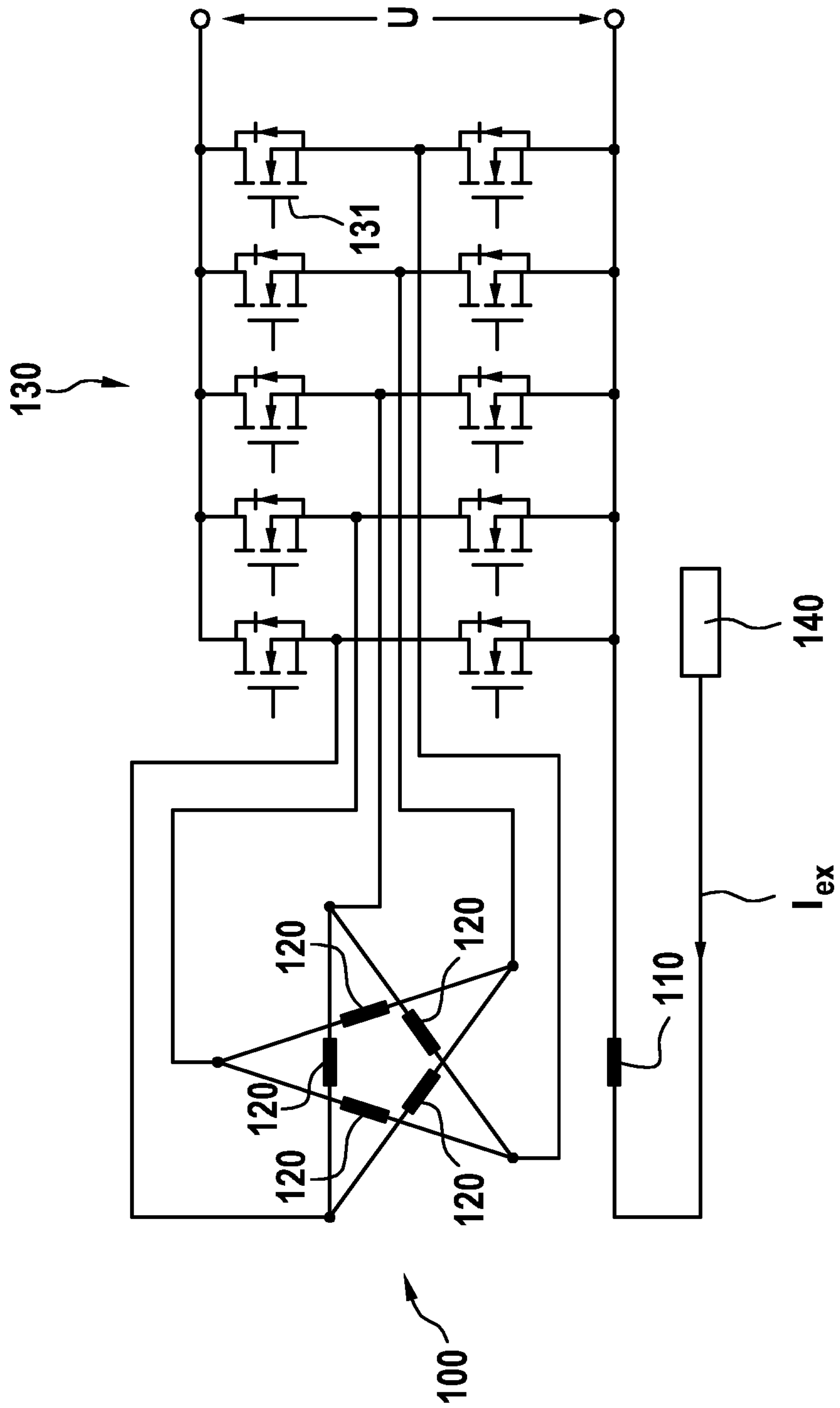


Fig. 1

Fig. 2

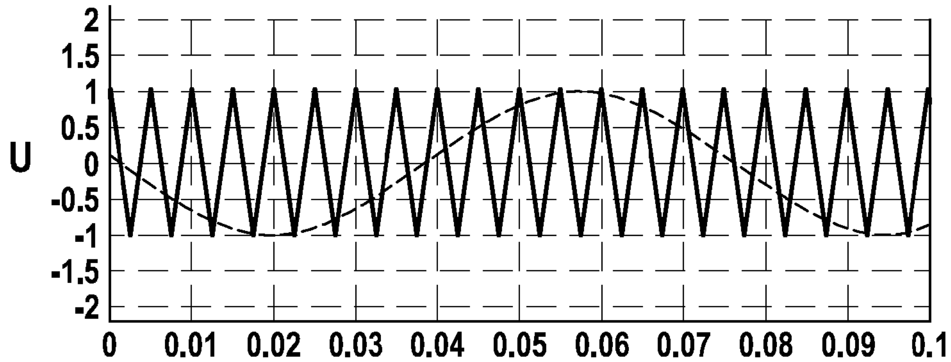
2
1.5
1
0.5
U
0
-0.5
-1
-1.5
-2
0
0.01
0.02
0.03
0.04
0.05
0.06
0.07
0.08
0.09
0.1

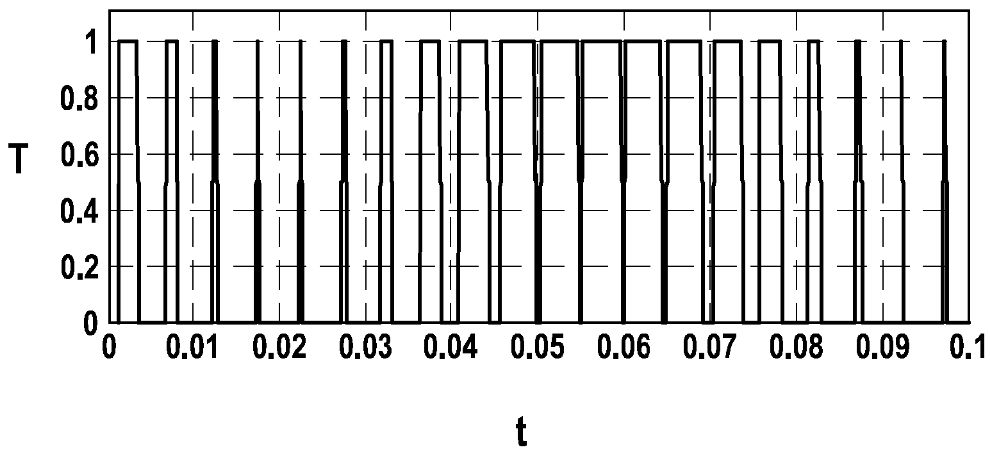
1
0.8
T
0.6
0.4
0.2
0
0
0.01
0.02
0.03
0.04
0.05
0.06
0.07
0.08
0.09
0.1
t

Fig. 3

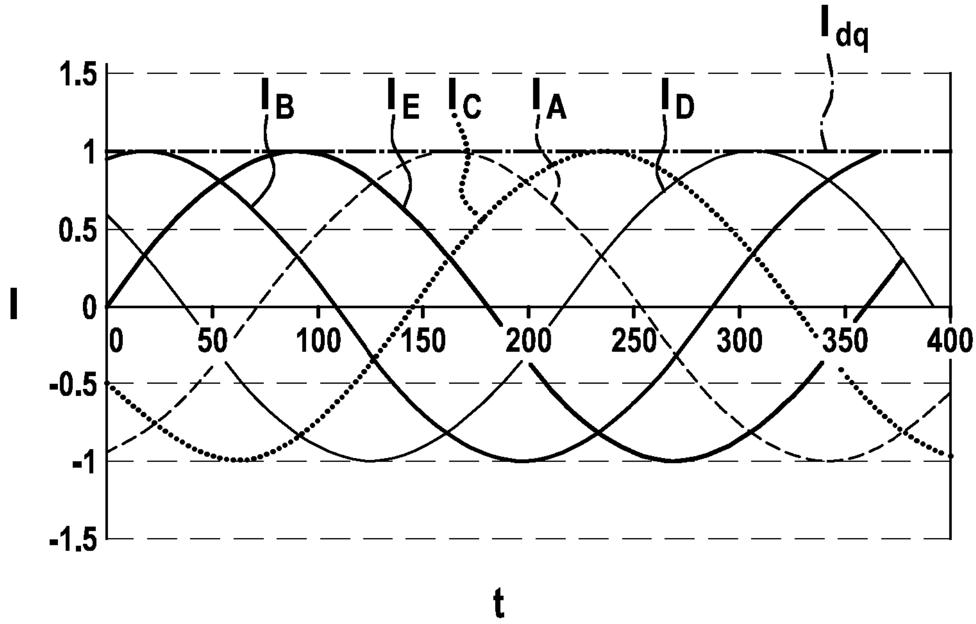

$I_{dq}$
1.5
1
0.5
0
-0.5
-1
-1.5
I
$I_B$
$I_E$
$I_C$
$I_A$
$I_D$
0
50
100
150
200
250
300
350
400
t


Fig. 4

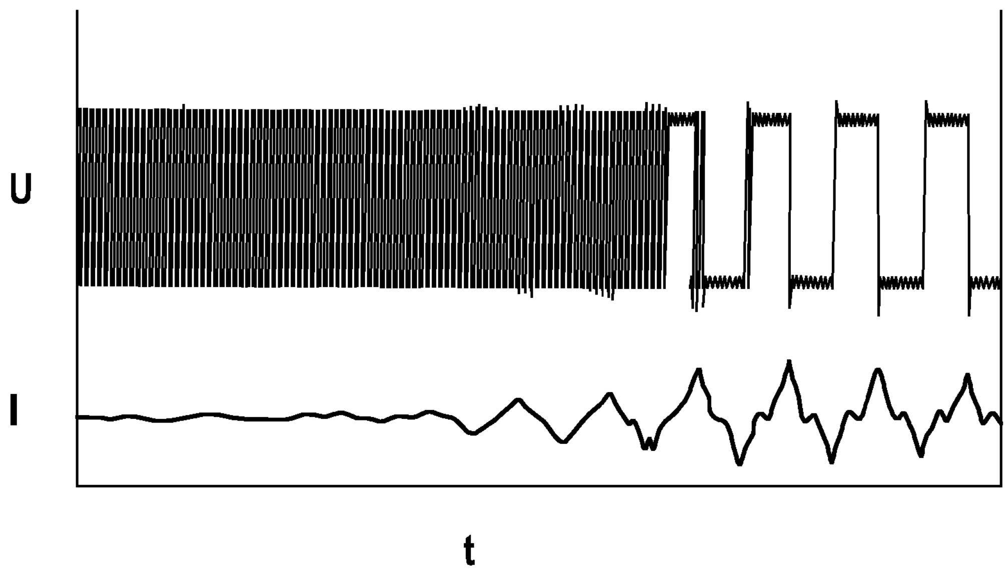

U
I
t

Fig. 5(a)

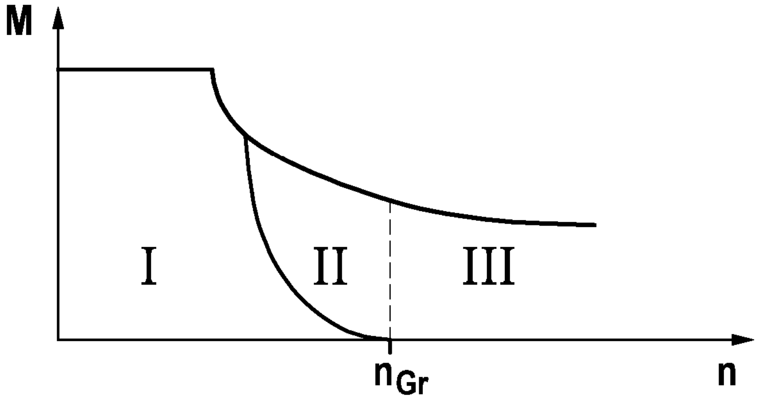


Fig. 5(b)

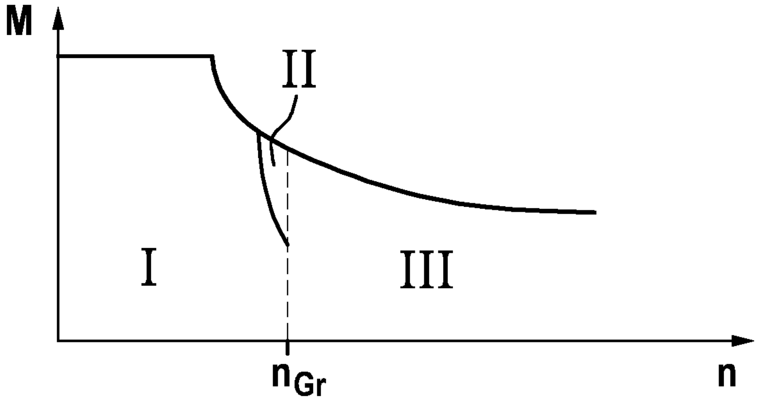

Fig. 6

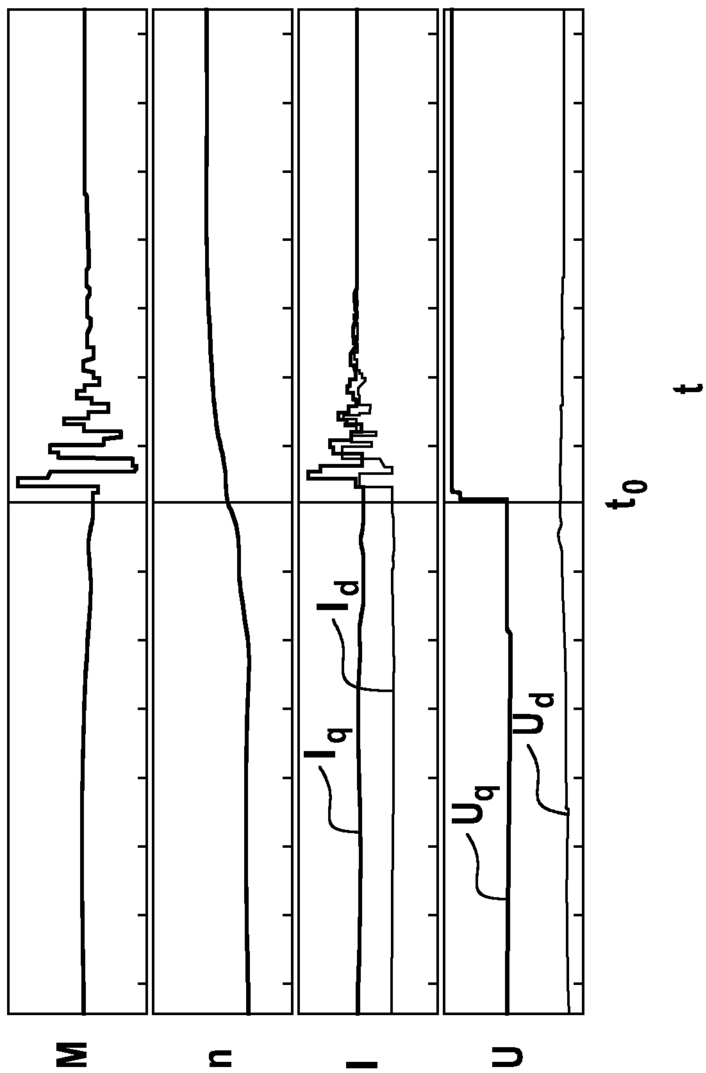

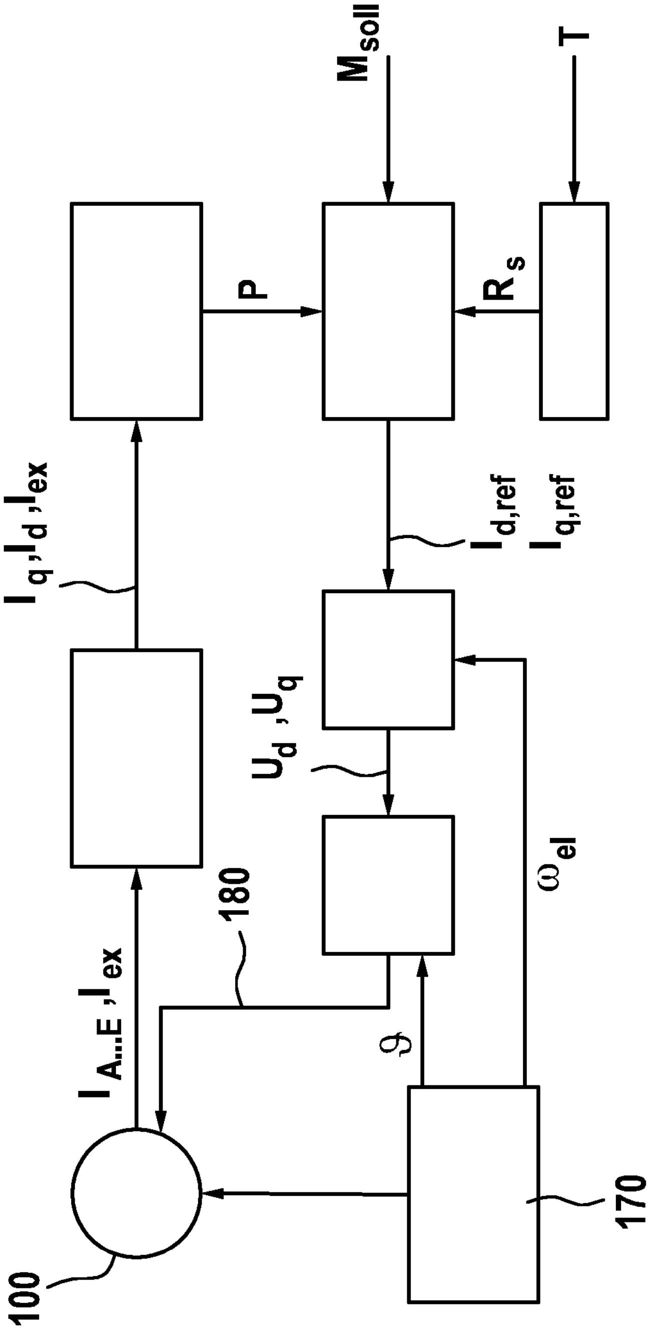


Fig. 7

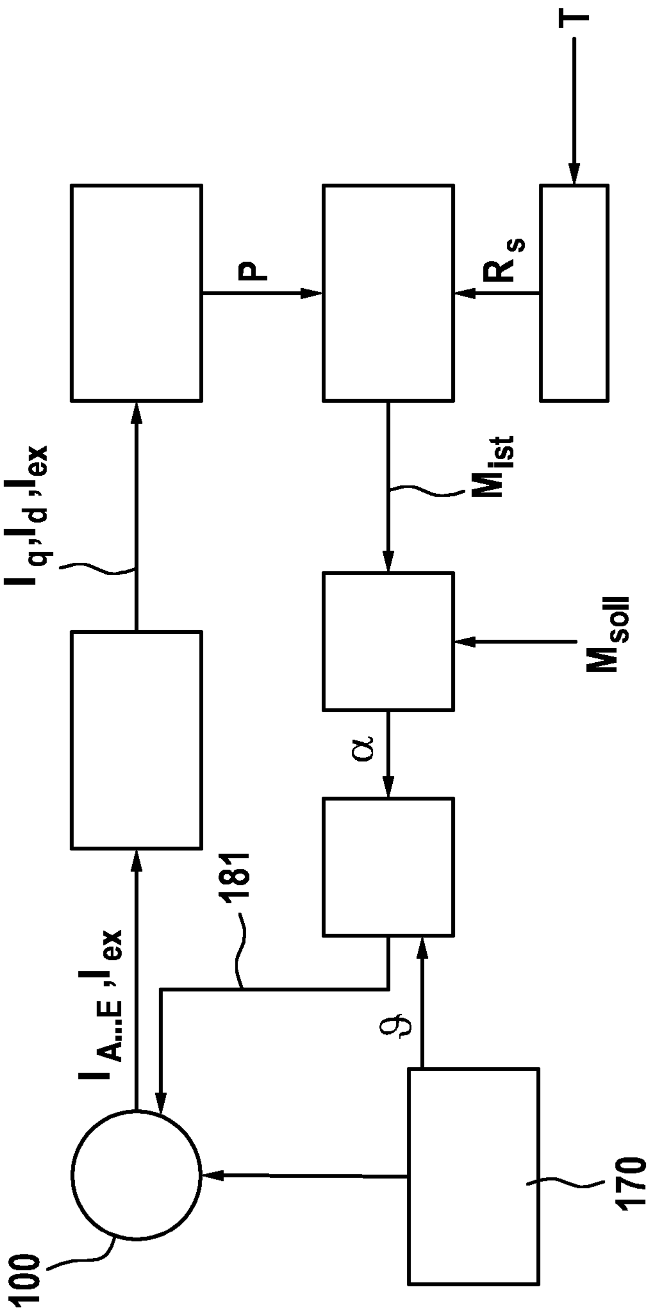


Fig. 8

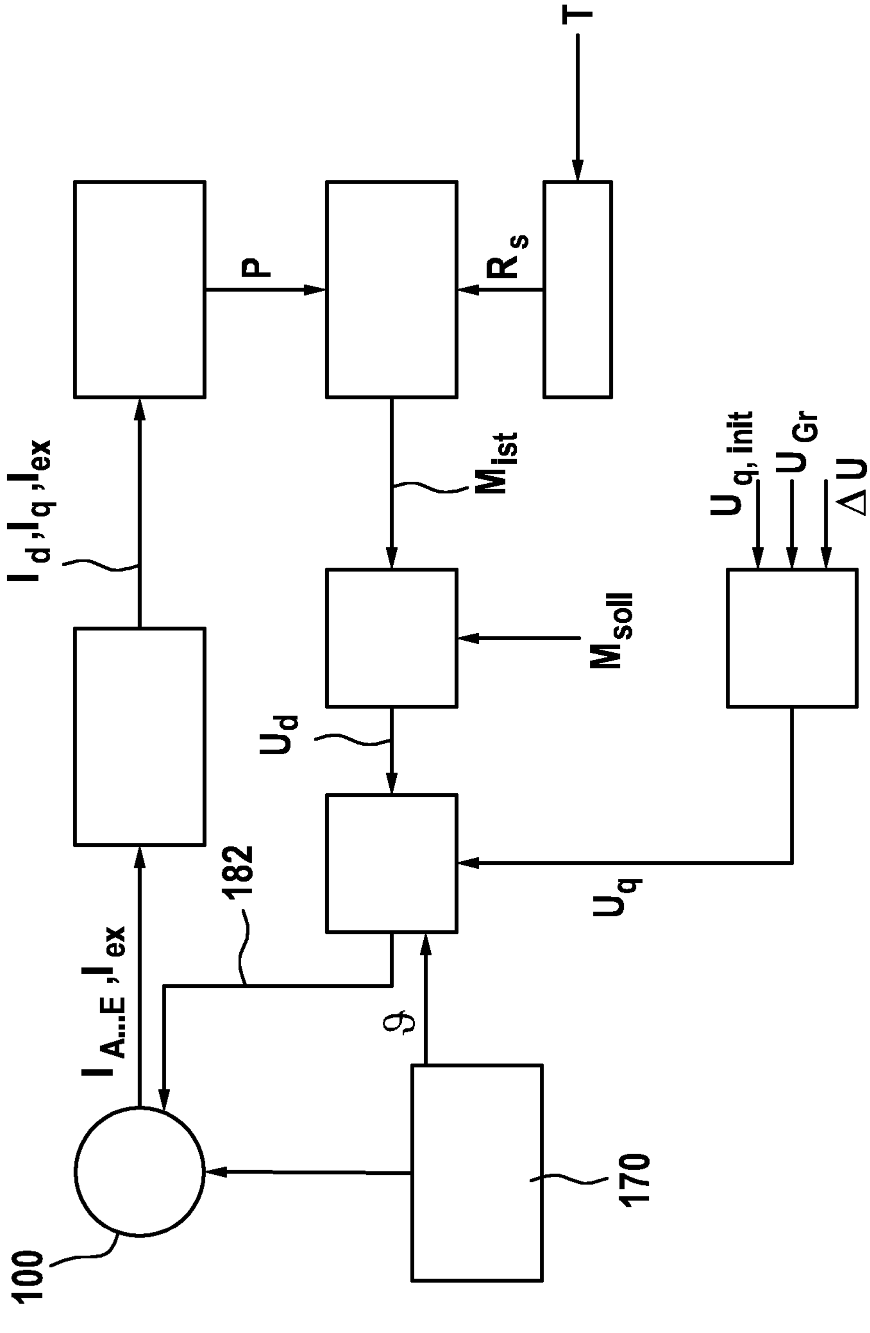

$I_d, I_q, I_{ex}$
P
$R_s$
T
$M_{Ist}$
$M_{soll}$
$U_{q,init}$
$U_{Gr}$
$\Delta U$
$U_d$
$U_q$
182
$I_{A...E}, I_{ex}$
$\vartheta$
100
170


Fig. 9

Fig. 10

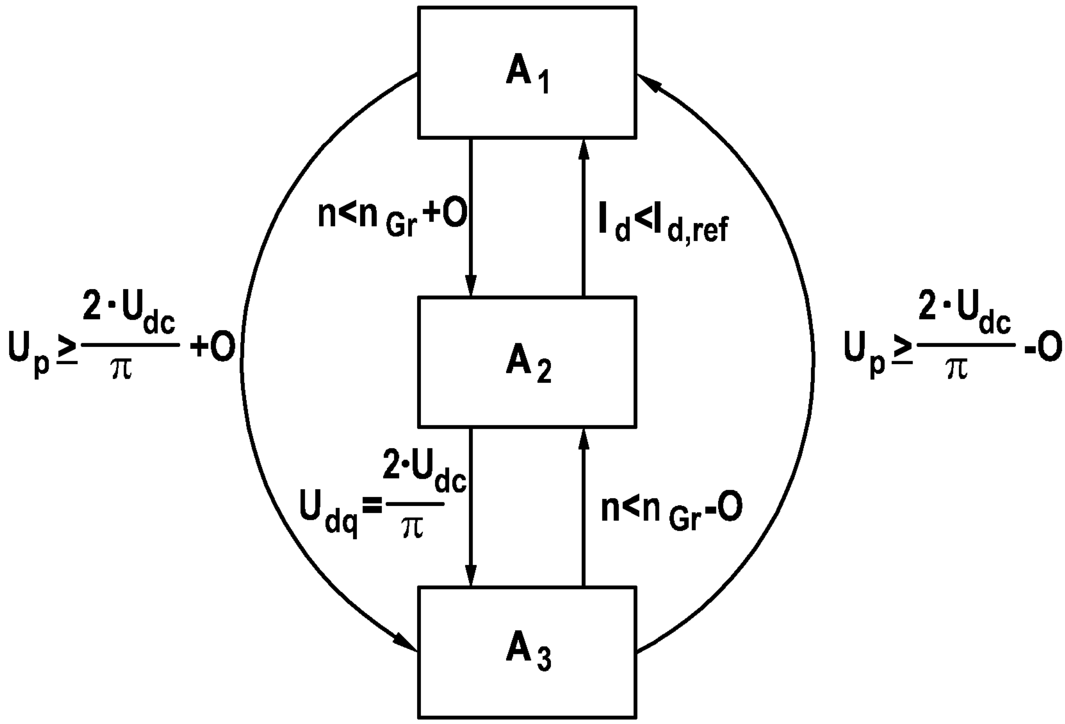

Fig. 11

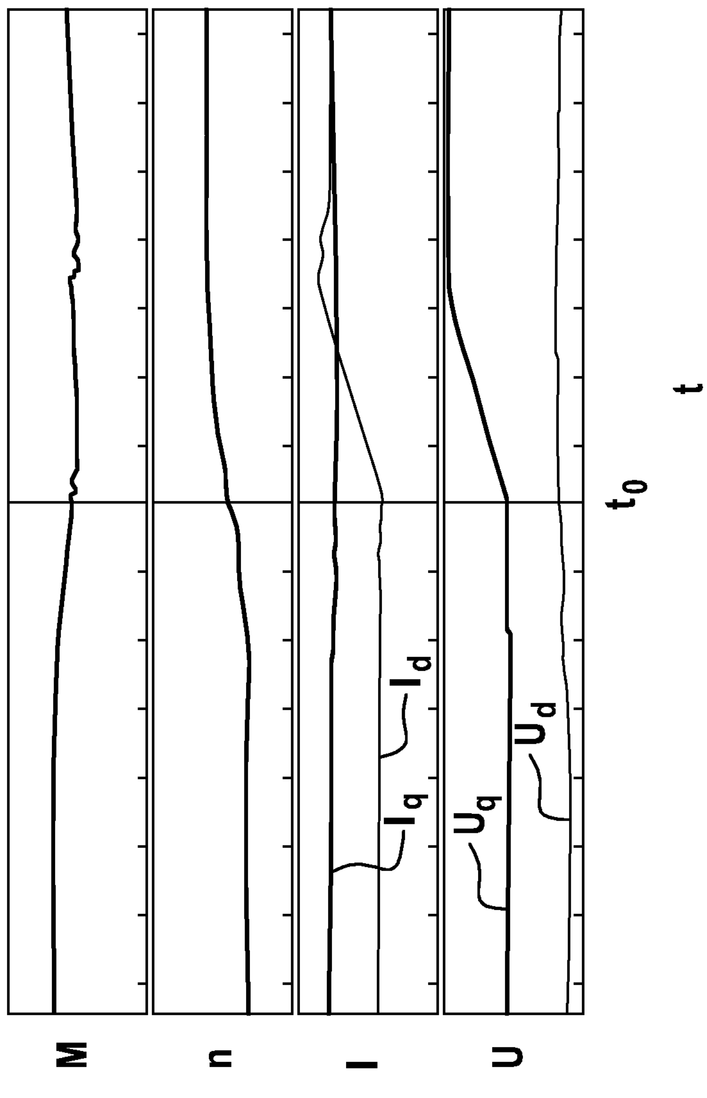

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102011076999 A1
- DE 102008020786 A1